(19) Europäisches Patentamt
European Patent Office
Office européen des brevets

(11) **EP 4 704 016 A1**

(12) **EUROPEAN PATENT APPLICATION**

(43) Date of publication:
04.03.2026 Bulletin 2026/10

(21) Application number: 25199210.3

(22) Date of filing: 29.08.2025

(51) International Patent Classification (IPC):
*G06Q 30/0241* (2023.01)  *G06Q 30/0251* (2023.01)
*G06N 20/00* (2019.01)

(52) Cooperative Patent Classification (CPC):
G06Q 30/0247; G06N 20/00; G06Q 30/0249;
G06Q 30/0271

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 30.08.2024  CN 202411213581

(71) Applicant: Hangzhou Alibaba International
Internet Industry
Co., Ltd.
Hangzhou, Zhejiang 310052 (CN)

(72) Inventors:
• ZHAO, Yifei
  Hangzhou (CN)
• LI, Feng
  Hangzhou (CN)

(74) Representative: **Marks & Clerk LLP**
**15 Fetter Lane**
**London EC4A 1BW (GB)**

(54) **ADVERTISEMENT GENERATION METHOD, COMPUTING DEVICE, STORAGE MEDIUM, AND PROGRAM PRODUCT**

(57)    This application provides a method for generating an advertisement, a computing device, a computer storage medium, and a computer program product. The method comprises: determining a material set; obtaining at least one estimated advertisement value generated by an advertisement plan based on any material in the material set; searching for a plurality of target materials such that at least one estimated advertisement value, respectively generated by a plurality of advertisement plans based on the plurality of target materials, satisfies an advertisement value requirement; and generating the plurality of advertisement plans by utilizing the plurality of target materials. The technical solution provided in this application ensures the rationality of advertisement plan generation.

Determining a material set — 101

Obtaining at least one estimated advertisement value generated by an advertisement plan based on any material in the material set — 102

Searching for a plurality of target materials such that at least one estimated advertisement value, respectively generated by a plurality of advertisement plans based on the plurality of target materials, satisfies an advertisement value requirement — 103

Generating the plurality of advertisement plans by utilizing the plurality of target materials. — 104

FIG. 1

EP 4 704 016 A1

## Description

## TECHNICAL FIELD

The embodiments of the present application relate to the computer technology field, and especially to an advertisement generation method, a computing device, a storage medium, and a program product.

## BACKGROUND

External advertisement refers to a promotion act of delivering an advertisement plan, used for promoting an advertisement object, to an external advertisement delivery system such as various media platforms, and paying relevant fees. An advertisement plan is mainly composed of one or more advertisement contents generated from materials such as an advertisement object, target users, and advertisement materials. After allocating a budget to the advertisement plan, the advertisement delivery system can perform promotion operations based on the advertisement plan under budget constraints.

Therefore, how to generate a reasonable advertisement plan to ensure delivery effectiveness has become a technical problem that needs to be solved by those skilled in the art.

## SUMMARY

The embodiments of the present application provide an advertisement generation method, a computing device, a storage medium, and a program product, used to realize the rationality of advertisement plan generation.

In a first aspect, an advertisement generation method is provided in an embodiment of the present application, including:

determining a material set;
obtaining at least one estimated advertisement value generated by an advertisement plan based on any material in the material set;
searching for a plurality of target materials such that at least one estimated advertisement value, respectively generated by a plurality of advertisement plans based on the plurality of target materials, satisfies an advertisement value requirement; and
utilizing the plurality of target materials to generate the plurality of advertisement plans.

Optionally, obtaining at least one first estimated advertisement value generated by an advertisement plan based on any material in the material set includes:

obtaining at least one estimated advertisement value generated by an advertisement plan based on any material in the material set by utilizing at least one value estimation model;
wherein the value estimation model is obtained by training according to a sample material and a sample advertisement value corresponding to the sample material.

Optionally, the value estimation model is obtained by training in the following manner:

determining a historical advertisement plan and a historical advertisement value generated by the historical advertisement plan;
taking a material involved in the historical advertisement plan as the sample material, and taking the historical advertisement value as the sample advertisement value; and
training the value estimation model by utilizing the sample material and the sample advertisement value.

Optionally, searching for a plurality of target materials such that at least one estimated advertisement value, respectively generated by a plurality of advertisement plans based on the plurality of target materials, satisfies an advertisement value requirement includes: solving for the target materials respectively matched by the plurality of advertisement plans, with a first estimated advertisement value respectively generated by the plurality of advertisement plans satisfying the advertisement value requirement as an optimization objective, and a second estimated advertisement value respectively generated by the plurality of advertisement plans being within a predetermined value range as a constraint condition.

Optionally, the method further includes:

weighting at least one estimated advertisement value corresponding to any material to generate a material value corresponding to the material;
wherein searching for a plurality of target materials such that at least one estimated advertisement value, respectively generated by a plurality of advertisement plans based on the plurality of target materials, satisfies an advertisement value requirement includes:
searching for a plurality of target materials such that the material value respectively corresponding to the plurality of target materials satisfies the advertisement value requirement;
or, wherein searching for a plurality of target materials such that at least one estimated advertisement value, respectively generated by a plurality of advertisement plans based on the plurality of target materials, satisfies the advertisement value requirement includes:
searching for at least two target materials respectively matched by the plurality of advertisement plans, with a material value difference between materials in a same advertisement plan satisfying a difference requirement as an optimization objective.

Optionally, the method further includes:

providing an interactive interface to a user terminal for a user to provide the material set and at least one advertisement value type in the interactive interface; obtaining the material set and the at least one advertisement value type sent by the user terminal; wherein obtaining at least one estimated advertisement value generated by an advertisement plan based on any material in the material set includes: obtaining at least one estimated advertisement value corresponding to the at least one advertisement value type, generated by an advertisement plan based on any material in the material set.

Optionally, the method further includes:

delivering the plurality of advertisement plans in a simulation system, and obtaining at least one simulated advertisement value respectively generated by the plurality of advertisement plans; determining whether all of the at least one simulated advertisement value respectively generated by the plurality of advertisement plans satisfy a first value evaluation requirement; if yes, delivering the plurality of advertisement plans to an advertisement delivery system; if no, outputting first prompt information.

Optionally, the method further includes:

delivering the plurality of advertisement plans to an advertisement delivery system; obtaining at least one advertisement value generated by any advertisement plan in the advertisement delivery system within a predetermined time; detecting whether the at least one advertisement value satisfies a second value evaluation requirement; if no, outputting second prompt information.

Optionally, the method further includes:

obtaining a first test sample, wherein the first test sample includes a test advertisement plan and a test advertisement value corresponding to the test advertisement plan; obtaining an estimated advertisement value corresponding to the test advertisement plan by utilizing the value estimation model; determining whether the value estimation model satisfies a model requirement according to the estimated advertisement value and the test advertisement value; if no, adjusting the value estimation model.

Optionally, the method further includes:

obtaining at least one estimated revenue value generated by any advertisement plan under any candidate budget allocation; determining the candidate budget respectively matched by the plurality of advertisement plans, with at least one estimated revenue value respectively corresponding to the plurality of advertisement plans satisfying a revenue value requirement as an optimization objective; and taking the candidate budget respectively matched by the plurality of advertisement plans as a target budget respectively corresponding to the plurality of advertisement plans.

Optionally, obtaining at least one estimated revenue value generated by any advertisement plan under any candidate budget allocation includes:

obtaining at least one estimated revenue value generated by any advertisement plan under any candidate budget allocation by utilizing at least one revenue estimation model; wherein the revenue estimation model is obtained by training according to a sample advertisement plan, a sample budget corresponding to the sample advertisement plan, and a sample revenue value.

Optionally, utilizing at least one revenue estimation model to obtain at least one estimated revenue value generated by any advertisement plan under any candidate budget allocation includes:

determining at least one advertisement feature corresponding to any advertisement plan; inputting the at least one advertisement feature and any candidate budget into at least one revenue estimation model to obtain at least one estimated revenue value generated by the advertisement plan under the candidate budget allocation.

Optionally, determining at least one advertisement feature corresponding to any advertisement plan includes:

determining at least one average revenue value generated by any advertisement plan during a historical time period; taking one or more of the at least one average revenue value, an audience characteristic corresponding to the advertisement plan, an object characteristic of an advertisement object corresponding to the advertisement plan, and a material characteristic of an advertisement material corresponding to the advertisement plan as the at least one advertisement feature corresponding to the advertisement plan.

Optionally, the revenue estimation model is obtained by training in the following manner:

obtaining a historical advertisement plan and a historical budget and a historical revenue value corresponding to the historical advertisement plan;
taking the historical advertisement plan as the sample advertisement plan, taking the historical budget as the sample budget, and taking the historical revenue value as the sample revenue value;
determining at least one sample advertisement feature of the sample advertisement plan; and
training the revenue estimation model by taking the at least one sample advertisement feature of the sample advertisement plan and the sample budget as input data, and taking the sample revenue value as a training label.

Optionally, the method further includes:

determining a budget candidate set respectively corresponding to the plurality of advertisement plans;
wherein obtaining at least one estimated revenue value generated by any advertisement plan under any candidate budget allocation includes:
obtaining at least one estimated revenue value generated by any advertisement plan under any candidate budget within a corresponding preset candidate set.

Optionally, determining the budget candidate set respectively corresponding to the plurality of advertisement plans includes:

for any advertisement plan, generating a plurality of candidate budgets within a budget range corresponding to an actual budget consumed by the advertisement plan in a previous delivery cycle, so as to constitute the budget candidate set;
wherein taking the candidate budget respectively matched by the plurality of advertisement plans as the target budget respectively corresponding to the plurality of advertisement plans includes:
taking the candidate budget respectively matched by the plurality of advertisement plans as the target budget respectively corresponding to the plurality of advertisement plans in a current delivery cycle;
wherein the method further includes:
updating the target budget respectively corresponding to the plurality of advertisement plans in the current delivery cycle to an advertisement delivery system, for the advertisement delivery system to perform promotion operations for the plurality of advertisement plans according to their respective corresponding target budget in the current delivery cycle.

Optionally, determining the candidate budget respectively matched by the plurality of advertisement plans, with at least one estimated revenue value respectively corresponding to the plurality of advertisement plans satisfying a revenue value requirement as an optimization objective, includes:
determining the candidate budget respectively matched by the plurality of advertisement plans, with maximization of a total value corresponding to a first estimated revenue value respectively generated by the plurality of advertisement plans as an optimization objective, and at least one second estimated revenue value respectively generated by the plurality of advertisement plans being within a value limit range, and a total budget of the candidate budget respectively corresponding to the plurality of advertisement plans being within a budget limit range as constraint conditions.

Optionally, the method further includes:

updating the target budget respectively corresponding to the plurality of advertisement plans to an advertisement delivery system, so that the advertisement delivery system performs promotion operations for the plurality of advertisement plans according to their respective corresponding target budget;
obtaining at least one revenue value generated by any advertisement plan in the advertisement delivery system within a predetermined time;
detecting whether the at least one revenue value satisfies a first revenue evaluation requirement;
if no, taking an actual budget of a previous delivery cycle of the advertisement plan as the target budget of a current delivery cycle, and updating it to the advertisement delivery system.

Optionally, the method further includes:

delivering the plurality of advertisement plans in a simulation system according to the target budget, and obtaining at least one simulated revenue value generated by the plurality of advertisement plans;
determining whether the at least one simulated revenue value satisfies a second revenue evaluation requirement;
if yes, delivering the plurality of advertisement plans to an advertisement delivery system;
if no, generating warning prompt information.

Optionally, the method further includes:

providing an interactive interface to a user terminal for a user to provide at least one revenue type and the constraint conditions in the interactive interface;
obtaining the at least one revenue type and the constraint conditions sent by the user terminal.

In a second aspect, a computing device is provided in an embodiment of the present application, including a processing component and a storage component; the storage component stores one or more computer instructions; the one or more computer instructions are used to be called and executed by the processing component to implement the advertisement generation method as claimed in the first aspect described above.

In a third aspect, a computer storage medium is provided in an embodiment of the present application, storing a computer program, wherein the computer program, when executed by a computer, implements the advertisement generation method as claimed in the first aspect described above.

In a fourth aspect, a computer program product is provided in an embodiment of the present application, including a computer program/instruction, wherein the computer program/instruction, when executed by a computer, implements the advertisement generation method as claimed in the first aspect described above.

In the embodiments of the present application, for a material set, at least one estimated advertisement value generated by an advertisement plan based on any material in the material set can be estimated first, and then a plurality of target materials can be searched such that at least one estimated advertisement value, respectively generated by a plurality of advertisement plans based on the plurality of target materials, satisfies an advertisement value requirement, thereby the plurality of advertisement plans can be generated by utilizing the plurality of target materials. In the embodiments of the present application, by estimating the advertisement value and performing optimization and solving based on the set advertisement value requirement, it is highly probable that the advertisement plans generated based on the identified plurality of target materials will satisfy the advertisement value requirement after delivery. The advertisement value requirement can be preset in conjunction with actual advertisement generation needs or delivery effectiveness needs, thereby ensuring the rationality of advertisement plan generation.

These and other aspects of the present application will become more readily apparent in the following description of the embodiments.

**BRIEF DESCRIPTION OF THE DRAWINGS**

To more clearly illustrate the technical solutions in the embodiments of the present application or in the prior art, the drawings used in the description of the embodiments or the prior art will be briefly introduced below. It is apparent that the drawings in the following description are some embodiments of the present application, and for those skilled in the art, other drawings can be obtained based on these drawings without creative efforts.

FIG. 1 shows a flowchart of an embodiment of an advertisement generation method provided in the present application;

FIG. 2 shows a schematic diagram of the system architecture of an advertisement processing system provided in the present application;

FIG. 3 shows a flowchart of another embodiment of an advertisement generation method provided in the present application;

FIG. 4 shows a conceptual schematic diagram of an advertisement processing procedure in a practical application in an embodiment of the present application;

FIG. 5 shows a structural schematic diagram of an embodiment of an advertisement generation apparatus provided in the present application;

FIG. 6 shows a structural schematic diagram of an embodiment of a computing device provided in the present application.

**DETAIL DESCRIPTION OF THE EMBODIMENTS**

To enable those skilled in the art to better understand the solutions of the present application, the technical solutions in the embodiments of the present application will be clearly and completely described below in conjunction with the accompanying drawings in the embodiments of the present application.

Some processes described in the specification, claims, and the aforementioned drawings of the present application include multiple operations appearing in a specific order, but it should be clearly understood that these operations may not be executed in the order in which they appear herein or executed in parallel. The operation numbers, such as 101, 102, etc., are only used to distinguish different operations, and the numbers themselves do not represent any execution order. In addition, these processes may include more or fewer operations, and these operations may be executed sequentially or in parallel. It should be noted that descriptions such as "first" and "second" herein are used to distinguish different messages, devices, modules, etc., and do not represent a sequential order, nor do they limit "first" and "second" to be different types.

The technical solutions of the embodiments of the present application can be applied to scenarios where objects are promoted through external advertisements, which means delivering advertisement plans, used for promoting objects to be promoted (hereinafter referred to as advertisement objects), to external advertisement delivery systems such as various media platforms, and paying relevant fees for promotion. The advertisement object can be, for example, an object provided in an online system, such as a product provided by an e-commerce platform, or it can be other offline or online objects that need to be promoted, etc. The present application does not limit this.

An advertisement plan may include one or more advertisement contents generated from materials such as an advertisement object, target users, and advertisement materials. After allocating a budget to the advertisement plan, the advertisement delivery system can perform promotion operations based on the advertisement plan under budget constraints. If the consumption cost of a certain advertisement plan exceeds the budget or exceeds the cost range determined based on the budget, the promotion operation corresponding to that advertisement plan can be paused.

The inventors found during the implementation of the present application that, in practical applications, advertisers (e.g., object providers) usually generate advertisement plans from given materials such as advertisement objects, advertisement materials, and/or target audiences. Among them, advertisement materials can refer to some recommended information about the advertisement object, which can be multimedia data such as videos, text, or images. Target audiences can refer to the promoted user group, for example, users within a specified age range, or with specified occupations, or specified users, etc. In traditional methods, advertisers usually generate advertisement plans based on given materials by combining manual experience. An advertisement plan may include multiple advertisement contents for the advertisement delivery system to output corresponding advertisement content according to its own logic to realize promotion operations. However, the manual generation method may not be coupled with external advertisement delivery systems and may not necessarily be consistent with actual needs. Therefore, how to generate a reasonable advertisement plan to improve delivery effectiveness has become a technical problem that needs to be solved at present.

To improve the rationality of advertisement plan generation and ensure delivery effectiveness, the inventors further found through research that, to maintain their own revenue, advertisement delivery systems may perform demotion operations on poorly performing advertisement plans, leading to a reduction in promotion operations corresponding to the advertisement plans, causing the consumption cost of the advertisement plans to be far from reaching the expected value, thereby affecting the delivery effectiveness. Therefore, the inventors realized the need to generate multiple advertisement plans to reduce delivery risks.

Based on the above research, the inventors, after a series of considerations, proposed the technical solutions of the embodiments of the present application. In the embodiments of the present application, for a given material set, at least one estimated advertisement value generated by an advertisement plan based on any material in the material set can be estimated first, and then a plurality of target materials can be searched such that at least one estimated advertisement value, respectively generated by a plurality of advertisement plans based on the plurality of target materials, satisfies an advertisement value requirement, thereby the plurality of advertisement plans can be generated by utilizing the plurality of target materials. In the embodiments of the present application, by performing optimization based on estimating the advertisement value and the preset advertisement value requirement, it is highly probable that the advertisement plans generated based on the identified plurality of target materials will satisfy the advertisement value requirement after delivery. The advertisement value requirement can be preset in conjunction with actual advertisement generation needs or delivery effectiveness needs, thereby ensuring the rationality of advertisement plan generation.

It should be noted that the user information (including but not limited to user device information, user personal information, etc.) and data (including but not limited to data for analysis, stored data, displayed data, etc.) involved in the present application are all information and data authorized by the user or fully authorized by all parties, and the collection, use, and processing of relevant data need to comply with relevant laws, regulations, and standards of relevant countries and regions, and corresponding operation entries are provided for users to choose to authorize or refuse.

It should be noted that the technical solutions of the embodiments of the present application are applicable to a network virtual environment, and the user described generally refers to a "virtual user". A real user can register a user account in the server through registration to obtain a user identity in the network environment.

The technical solutions in the embodiments of the present application will be clearly and completely described below in conjunction with the accompanying drawings in the embodiments of the present application. Obviously, the described embodiments are only some embodiments of the present application, rather than all of the embodiments. All other embodiments obtained by those skilled in the art based on the embodiments in the present application without creative efforts shall fall within the protection scope of the present application.

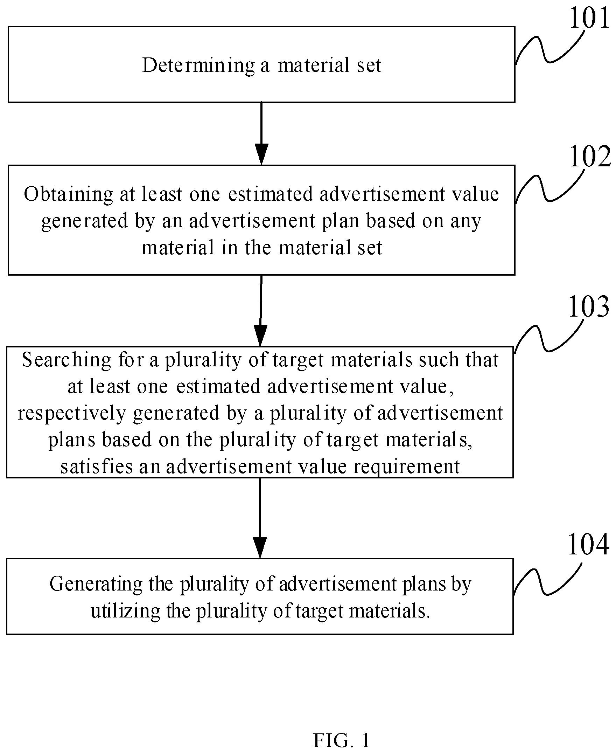

FIG. 1 shows a flowchart of an embodiment of an advertisement generation method provided in the present application. The technical solution of this embodiment can be executed by a server, and the method may include the following steps:
101: determining a material set.

The materials in the material set can be provided by a user, i.e., an advertiser. The user can be a provider of advertisement objects, such as a merchant, or an operator of an online system that provides object exchange behaviors, such as an e-commerce platform operator, etc. The present application does not limit this.

The user can provide the materials in the material set through code configuration. In addition, for convenience of operation, an interactive interface can also be provided, and the materials in the material set can be provided through interface input, etc., which will be described in detail in the following embodiments.

The materials in the material set can refer to single elements such as an advertisement object, advertisement material, or target audience, or they can be combined elements composed of multiple elements from advertisement objects, advertisement materials, and/or target audiences. The combined elements can be formed by any combination of advertisement objects, any advertisement materials, and/or any target audiences, etc. The present application does not limit this.

102: obtaining at least one estimated advertisement value generated by an advertisement plan based on any material in the material set.

In the embodiments of the present application, one material can generate one advertisement plan. This material may include one or more elements from advertisement objects, advertisement materials, and target audiences, and one element can belong to one or more advertisement plans.

And one advertisement plan may correspond to one or more materials.

In the embodiments of the present application, the advertisement value that may be generated by an advertisement plan based on a material can be estimated. For convenience of description, the estimation result is named "estimated advertisement value".

In the embodiments of the present application, the advertisement value can refer to, for example, click-through rate, conversion rate, impressions, daily active users, GMV (Gross Merchandise Volume), or ROI (Return on Investment), etc. At least one estimated advertisement value may include one or more of these metrics, such as click-through rate, conversion rate, impressions, daily active users, GMV, and ROI.

Click-through rate can refer to the ratio of the number of clicks corresponding to an advertisement plan to the number of displays within a unit time, when the promotion operation based on the advertisement plan is displaying advertisement information. Conversion rate can refer to the ratio of the number of interactive behaviors, such as purchases, for the advertisement object corresponding to the advertisement plan to the number of displays within a unit time. Impressions can refer to the number of displays of the advertisement plan within a unit time. Daily active users can refer to new daily users attracted by the advertisement plan delivery. GMV can refer to the total transaction volume of goods promoted by the advertisement plan within a certain period when the advertisement object is a product; ROI can refer to the ratio of GMV to input cost.

103: searching for a plurality of target materials such that at least one estimated advertisement value, respectively generated by a plurality of advertisement plans based on the plurality of target materials, satisfies an advertisement value requirement.

104: generating the plurality of advertisement plans by utilizing the plurality of target materials.

Optionally, after generating the plurality of advertisement plans based on the plurality of target materials, the plurality of advertisement plans can be delivered to an advertisement delivery system for the advertisement delivery system to execute corresponding promotion operations based on each advertisement plan.

Each target material can be used to generate one advertisement plan. As described above, a target material may include a single element from an advertisement object, target audience, advertisement material, or a combination of multiple elements. If the target material includes partial elements, the advertisement plan can be generated by utilizing the target material and other elements besides the target material, and the other elements besides the target material can be preset, etc. Certainly, in a specific implementation, the target material may include all elements constituting the advertisement plan, such as a combined element composed of an advertisement object, target audience, and advertisement material. The present application does not limit this.

In the embodiments of the present application, the advertisement value requirement can be set as the optimization objective, thereby a plurality of target materials satisfying the optimization objective can be found, and then an advertisement plan can be generated based on each target material, thereby obtaining a plurality of advertisement plans. By performing optimization based on estimating the advertisement value and the preset advertisement value requirement, it is highly probable that the advertisement plans generated based on the identified plurality of target materials will satisfy the advertisement value requirement after delivery. The advertisement value requirement can be preset in conjunction with actual advertisement generation needs or delivery effectiveness needs, thereby ensuring the rationality of advertisement plan generation.

In some embodiments, the obtaining at least one estimated advertisement value generated by an advertisement plan based on any material in the material set may include:

utilizing at least one value estimation model to obtain at least one estimated advertisement value generated by an advertisement plan based on any material in the material set.

The value estimation model is obtained by training according to a sample material and a sample advertisement value corresponding to the sample material.

Each value estimation model can be used to obtain an estimated advertisement value corresponding to a value type. The value type can refer to, for example, click-through rate type, conversion rate type, impression type, daily active user type, GMV type, or ROI type, etc.

In the embodiments of the present application, value estimation can be effectively realized by utilizing machine learning models. The value estimation model can be, for example, a classifier, a support vector machine, various neural network models, or AI (Artificial Intelligence) models, etc. The present application does not limit this.

In some embodiments, the value estimation model can be pre-trained in the following manner:

determining a historical advertisement plan and a historical advertisement value generated by the historical advertisement plan; taking a material involved in the historical advertisement plan as the sample material, and taking the historical advertisement value as the sample advertisement value; utilizing the sample material and the sample advertisement value to train the value estimation model.

The embodiments of the present application train the value estimation model by combining historical data, thereby enabling the value estimation model to learn and understand patterns and trends in the data from historical data, and to make accurate predictions for future or unknown data based on this, thereby improving estimation accuracy.

As described above, each material can belong to only one advertisement plan. The at least one estimated advertisement value generated by the advertisement plan for each material can be regarded as at least one estimated advertisement value corresponding to the each material. In practical applications, due to the long link from material to advertisement revenue, to ensure accuracy, at least one estimated advertisement value may include multiple estimated advertisement values, which may include estimated advertisement values corresponding to different stages in the link from material to advertisement revenue. For example, multiple estimated advertisement values may include click-through rate, conversion rate, and ROI. To facilitate processing, multiple estimated advertisement values corresponding to each material can be weighted, and the weighted processing result can be used as the material value. Therefore, in some embodiments, the method can also include:
weighting at least one estimated advertisement value corresponding to a material to generate a material value corresponding to the material.

The weighting process may include, for example, weighted sum, weighted average, or weighted power calculation, etc. Weighted sum can refer to the sum of products obtained by multiplying each estimated advertisement value by its weight; weighted average can refer to the sum of products obtained by multiplying each estimated advertisement value by its weight divided by the sum of all weights; weighted power calculation can refer to performing power calculation on each estimated advertisement value by using its weight as the exponent, and then multiplying the power calculations of each estimated advertisement value, etc. Certainly, the present application is not limited to this.

After obtaining the material value, in one implementation, the aforementioned searching for a plurality of target materials such that at least one estimated advertisement value, respectively generated by a plurality of advertisement plans based on the plurality of target materials, satisfies an advertisement value requirement can be: searching for a plurality of target materials such that the material value respectively corresponding to the plurality of target materials satisfies the advertisement value requirement.

The advertisement value requirement can be, for example, the maximization of the sum of material values, to ensure that the plurality of advertisement plans generated based on the plurality of target materials can bring better revenue, thereby ensuring delivery effectiveness.

As another implementation, since an advertisement plan may involve one or more materials, in practical applications, if multiple materials are involved, the multiple materials will be considered homogeneous by the advertisement delivery system, which will lead to certain losses. Therefore, it is necessary to ensure the homogeneity of materials within the same advertisement plan, which is difficult to achieve with traditional manual generation methods. By adopting the technical solution of the embodiments of the present application, the aforementioned searching for a plurality of target materials such that at least one estimated advertisement value, respectively generated by a plurality of advertisement plans based on the plurality of target materials, satisfies an advertisement value requirement can be: searching for at least two target materials respectively matched by the plurality of advertisement plans, with a material value difference between materials in a same advertisement plan satisfying a difference requirement as an optimization objective. This implementation can ensure the homogeneity of at least two target materials in multiple advertisement plans.

The material value difference between materials can be represented by calculating the degree of dispersion between material values. The degree of dispersion can be represented by data indicators such as variance, standard deviation, or mean deviation, etc. When ensuring the homogeneity of materials in the same generated advertisement plan, the difference requirement can refer to the minimum degree of dispersion, such as the minimum variance, etc.

In addition, as yet another implementation, materials in the material set can also be grouped using different partitioning methods. Materials in the same group can be used as target materials to generate a corresponding advertisement plan, and the multiple advertisement plans corresponding to each group can be considered as advertisement plans satisfying the advertisement value requirement.

There can be various grouping methods, such as an equi-frequency grouping method, which divides multiple materials with a material value difference within a specified difference range into one group, thereby ensuring the homogeneity between materials in each group and ensuring the final delivery effectiveness. Certainly, according to different actual needs, grouping can also be performed using methods such as equi-distance grouping or clustering grouping, such as K-means (a clustering algorithm) grouping. The present application does not limit this.

Furthermore, to ensure delivery efficiency and delivery effectiveness, etc., the advertisement value requirement may include an optimization objective and constraint conditions, etc. In some embodiments, the aforementioned searching for a plurality of target materials such that at least one estimated advertisement value, respectively generated by a plurality of advertisement plans based on the plurality of target materials, satisfies an advertisement value requirement may include:

solving for the target materials respectively matched by the plurality of advertisement plans, with a first estimated advertisement value respectively generated by the plurality of advertisement plans satisfying the advertisement value requirement as an optimization objective, and a second estimated advertisement value respectively generated by the plurality of advertisement plans being within a predetermined value range as a constraint condition.

The first estimated advertisement value can be an estimated advertisement value of a specified value type, such as ROI, etc. The second estimated advertisement value can be an estimated advertisement value of other specified value types different from the first estimated advertisement value, such as click-through rate, conversion rate, impressions, daily active users, or GMV, etc. The second estimated advertisement value may include one or more. If there are multiple second estimated advertisement values, the constraint condition can be that each second estimated advertisement value is within its respective predetermined value range. Certainly, it can also be that the sum of second estimated advertisement values respectively generated by multiple advertisement plans is within the predetermined value range. The sum of second estimated advertisement values respectively generated by multiple advertisement plans being within a predetermined value range means constraining the overall advertisement value corresponding to the advertiser from a holistic perspective. The sum of second estimated advertisement values respectively generated by multiple advertisement plans can be obtained by adding the second estimated advertisement values respectively generated by multiple advertisement plans.

The predetermined value range can be used to constrain the minimum and maximum values of the second estimated advertisement value or the sum of second estimated advertisement values, etc.

As described previously, the advertisement value requirement can be, for example, the maximization of the sum of first estimated advertisement values respectively generated by multiple advertisement plans, or the first estimated advertisement value can be used as the material value corresponding to the materials included in the advertisement plan. Then, the advertisement value requirement can also be, for example, that the material value difference between materials in the same advertisement plan satisfies a difference requirement.

The maximization of the sum of first estimated advertisement values respectively generated by multiple advertisement plans means evaluating the overall advertisement value corresponding to the advertiser from a holistic perspective. The sum of first estimated advertisement values respectively generated by multiple advertisement plans is obtained by adding the first estimated advertisement values respectively generated by multiple advertisement plans.

Optionally, the material value difference between materials in each advertisement plan can be calculated first, and the advertisement value requirement can be that the sum of material value differences respectively corresponding to multiple advertisement plans satisfies a difference requirement. If the material value difference is variance, the difference requirement can be, for example, that the sum of variances corresponding to multiple advertisement plans is minimized, etc.

In practical applications, for example, a plurality of target materials can be solved for according to the following objective function:

$$\min_{C \in \Delta} \sum_{m=1}^{M} D(C[m:] \cdot U)$$

Where

$$\Delta = \{C \in [0,1]^{M \times L} : \sum_{m=1}^{M} C_{m,l} = 1, \forall l \in [L]\}$$

represents the matching matrix between materials and advertisement plans;

$M$ represents the number of advertisement plans; $D$ represents a differentiation function, such as a variance function, used to calculate the material value difference between materials in the same advertisement plan, i.e., variance. $U$ represents material value or first estimated advertisement value; $L$ represents the material set; $l$ represents a material; $C[m:]$ represents the matching relationship between material $l$ and the $m$-th advertisement plan. $C[m:]=0$ means that material $l$ did not generate the m-th advertisement plan and has no matching relationship; $C[m:]=1$ means that material $l$ generated the m-th advertisement plan and has a matching relation-

$$\sum_{m=1}^{M} C_{m,l} = 1$$

ship. means that one material belongs to one advertisement plan and only has a matching relationship with one advertisement plan.

By solving the above objective function, the matching matrix can be obtained. Based on the values 0 and 1 in the matching matrix, the target materials respectively matched by the $M$ advertisement plans can be determined.

Where U represents the material value situation, and this material value can be obtained, for example,

$$U = p_1^{\alpha_1} p_2^{\alpha_2} \cdots p_k^{\alpha_k}$$

in the following manner:

Where $p_i$ represents the estimated advertisement value, $\alpha_i$ represents the weight, $i$=1,2,...,k, and k represents the number of estimated advertisement values.

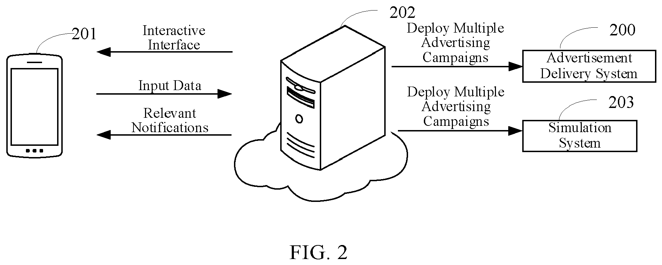

In addition, as described previously, the material set can be provided by a user; and the advertisement plans generated based on the target materials can be delivered to the advertisement delivery system. To facilitate the management of advertisement plans, etc., the embodiments of the present application also provide an advertisement processing system, as shown in the system architecture diagram in FIG. 2, which may include a user terminal 201 and a server 202. The user terminal 201 and the server 202 can establish a connection through a network. The network provides a medium for the communication link between the user terminal 201 and the server 202. The network may include various connection types, such as wired, wireless communication links, or optical fiber cables, etc. The user terminal 201 can interact with the server 202 through the network to receive or send messages, etc. The server 202 can connect with the advertisement delivery system 200 to directly deliver the advertisement plans to the advertisement delivery system 200 based on the connection.

The user terminal 201 can be a browser, an APP (Application), a web application such as H5 (HyperText Markup Language 5) application, a light application (also known as a mini-program, a lightweight application), or a cloud application, etc. The user terminal 201 can be deployed in an electronic device and needs to rely on the device's operation or certain apps in the device to run, etc. The electronic device can, for example, have a display screen and support information Browse, etc., such as a personal mobile terminal like a mobile phone, tablet computer, personal computer, desktop computer, smart speaker, smart watch, etc. For ease of understanding, FIG. 1 mainly represents the user terminal as a device. Various other types of applications can also be configured in the electronic device, such as human-computer dialogue applications, model training applications, text processing applications, web browser applications, shopping applications, search applications, instant messaging tools, email clients, social platform software, etc. The electronic device can refer to a device used by a user, having functions such as computing, internet access, and communication desired by the user, such as a mobile phone, tablet computer, personal computer, wearable device, etc. An electronic device can usually include at least one processing component and at least one storage component. An electronic device may also include basic configurations such as a network card chip, I/O bus, audio and video components, etc. The present application does not limit this. Optionally, depending on the implementation form of the electronic device, some peripheral devices can also be included, such as a keyboard, mouse, input pen, printer, etc. The present application does not limit this.

The server 202 may include servers that provide various services, such as a server that supports model training, or a server that processes information sent by the user terminal, etc.

It should be noted that the server 202 can be implemented as a distributed server cluster composed of multiple servers, or as a single server. The server can also be a server of a distributed system, or a server combined with blockchain. The server can also be a cloud server that provides basic cloud computing services such as cloud services, cloud databases, cloud computing, cloud functions, cloud storage, network services, cloud communication, middleware services, domain name services, security services, content delivery networks (CDN), and big data and artificial intelligence platforms, or an intelligent cloud computing server or intelligent cloud host with artificial intelligence technology.

The advertisement generation method provided in the embodiment shown in FIG. 1 can be executed by the server 202. The material set can be provided by the user through the user terminal 201, etc. Therefore, in some embodiments, the method can also include: providing an interactive interface to the user terminal for a user to provide the material set in the interactive interface; obtaining the material set sent by the user terminal.

In addition, the user can also specify the value type through the interactive interface to facilitate the determination of the estimation target, etc. Therefore, in some embodiments, it can be: obtaining the material set and at least one value type sent by the user terminal; the at least one value type is provided by the user in the interactive interface;

The aforementioned obtaining at least one estimated advertisement value generated by an advertisement plan based on any material in the material set includes:

obtaining at least one estimated advertisement value corresponding to the at least one advertisement value type, generated by an advertisement plan based on any material in the material set.

In some possible implementations, the server can send material prompt information to the user terminal for the user terminal to display the material prompt information in the interactive interface. The material prompt information may include input controls for sensing the material set input by the user, etc., or the material prompt information may include a material list and selection controls, etc., for sensing the material set selected by the user in the designated material list. Certainly, the implementation solution of the present application is not limited to this.

In addition, the server can send value type prompt information to the user for the user terminal to display the value type prompt information in the interactive interface. The value type prompt information may include input controls for sensing at least one value type input by the user, etc., or the value type prompt information may include multiple value types and selection controls for sensing at least one value type selected by the user from multiple value types. Certainly, the implementation solution of the present application is not limited to this.

To ensure the accuracy of estimation results and guarantee final delivery effectiveness, in some embodiments, as shown in FIG. 2, the advertisement processing system can also include a simulation system 203, and the method can also include:

delivering the plurality of advertisement plans in the simulation system, and obtaining at least one simulated advertisement value respectively generated by the plurality of advertisement plans; determining whether all of the at least one simulated advertisement value respectively generated by the plurality of advertisement plans satisfy a first value evaluation requirement; if yes, delivering the plurality of advertisement plans to an advertisement delivery system; if no, outputting first prompt information.

The simulation system is a simulation model of the advertisement delivery system, used to perform simulation delivery for multiple advertisement plans to be delivered, and to decide whether to actually deliver them to the advertisement delivery system in conjunction with the simulated advertisement value generated in the simulation system.

The first value evaluation requirement can be set in conjunction with actual needs, etc., to evaluate each simulated advertisement value of each advertisement plan or the comprehensive value of at least one simulated advertisement value corresponding to each advertisement plan or the total value of each simulated advertisement value of multiple advertisement plans. The comprehensive value can be obtained through weighting, and the total value can be obtained through summation or weighted summation, etc. For example, if at least one simulated advertisement value includes ROI, GMV, or conversion rate, the first value evaluation requirement can be, for example, that the ROI, GMV, or conversion rate of each advertisement plan respectively reaches a specified evaluation threshold, or that the total ROI, total GMV, or total conversion rate corresponding to multiple advertisement plans reaches a specified evaluation threshold, or that the comprehensive value of each advertisement plan reaches a specified evaluation threshold, etc. Certainly, it can also be set based on the advertisement value requirement, etc. The present application does not limit this.

At least one simulated advertisement value can have the same value type as at least one estimated advertisement value, or different value types of advertisement values can be used for verification and evaluation.

If each advertisement plan satisfies the first value evaluation requirement, then the plurality of advertisement plans can be delivered to the advertisement delivery system. Otherwise, if any advertisement plan does not satisfy the first value evaluation requirement, then first prompt information can be output.

Optionally, the outputting of first prompt information can be sending the first prompt information to the user terminal for the user terminal to display the first prompt information in the interactive interface. The first prompt information can be used to notify the user that multiple advertisement plans failed verification, etc. In addition, it can also include at least one simulated advertisement value corresponding to each advertisement plan, so that the user can analyze the reason and readjust the material set and/or value type, etc.

In addition, after the advertisement plan is delivered to the advertisement delivery system, its delivery effectiveness can also be detected. In some embodiments, the method can also include:

delivering the plurality of advertisement plans to an advertisement delivery system; obtaining at least one advertisement value generated by any advertisement plan in the advertisement delivery system within a predetermined time; detecting whether the at least one advertisement value satisfies a second value evaluation requirement; if no, outputting second prompt information.

The advertisement plans delivered to the advertisement delivery system can also be detected to determine whether they satisfy the second value evaluation requirement. The first value evaluation requirement and the second value evaluation requirement can be the same or different, etc. The value type being evaluated can be the same or different, or if the value type is the same, the evaluation threshold can be different, etc.

Advertisement plans that satisfy the second value evaluation requirement can continue to be delivered. If any advertisement plan does not satisfy the second value evaluation requirement or if multiple advertisement plans do not satisfy the second value evaluation requirement, second prompt information can be output.

Optionally, the outputting of second prompt information can be sending the second prompt information to the user terminal for the user terminal to display the second prompt information in the interactive interface. The second prompt information can be used to notify the user that the advertisement plan delivery effectiveness is poor, etc. In addition, it can also include at least one advertisement value corresponding to the advertisement plan, so that the user can perform manual evaluation to decide whether to stop delivering the plurality of advertisement plans, etc.

In addition, as described above, the estimated advertisement value can be obtained by evaluation using a value estimation model. In some embodiments, the method can also include:

obtaining a first test sample; the first test sample includes a test advertisement plan and a test advertisement value corresponding to the test advertisement plan; obtaining an estimated advertisement value corresponding to the test advertisement plan by utilizing the value estimation model; determining whether the value estimation model satisfies a model requirement according to the estimated advertisement value and the test advertisement value; if no, adjusting the value estimation model.

If the value estimation model satisfies the model requirement, then the value estimation model can be used to obtain the estimated advertisement value generated by an advertisement plan based on any material in the material set.

The first test sample can also come from historical delivery records. The test advertisement plan can also be a historical advertisement plan, and the test advertisement value can also be the historical advertisement value generated by the historical advertisement plan, etc.

The model requirement can be, for example, that the difference between the estimated advertisement value and the test advertisement value is within an allowed range, etc. If the value estimation model does not meet the model requirement, the value estimation model can be adjusted. For example, it can return to the step of utilizing the sample material and the sample advertisement value to train the value estimation model to continue execution to retrain the value estimation model or readjust the training samples, etc.

In addition, adjustment prompt information can also be output to prompt the user whether to adjust the value estimation model, etc. The adjustment prompt information may include difference information between the estimated advertisement value and the test advertisement value, etc. The adjustment prompt information can be sent to the user terminal for the user terminal to display the adjustment prompt information, etc.

In the embodiments of the present application, by testing the value estimation model using the first test sample, the performance and generalization ability of the model can be evaluated, ensuring model accuracy.

As described above, the embodiments of the present application achieve algorithm white-boxing through simulation evaluation, delivery feedback, and a visual interactive interface, enhancing the controllability of the results and meeting the usage needs of upstream and downstream.

In practical applications, before an advertisement plan is delivered, a budget can also be allocated to it. A budget can refer to the advertisement delivery cost preset by the user within a certain period. The advertisement delivery system can perform promotion operations based on the advertisement plan under budget constraints. If the consumption cost of a certain advertisement plan exceeds the budget or exceeds the cost range determined based on the budget, the promotion operation corresponding to that advertisement plan can be paused. It can be seen that the budget affects the promotion operations of the advertisement plan, thereby affecting the delivery effectiveness. Therefore, how to perform reasonable budget allocation is also a technical problem that needs to be solved to improve delivery effectiveness.

The inventors found during the implementation of the present application that traditional methods often use a preset budget, where the budget corresponding to each advertisement plan is the same and fixed. This method obviously cannot meet the rationality requirements.

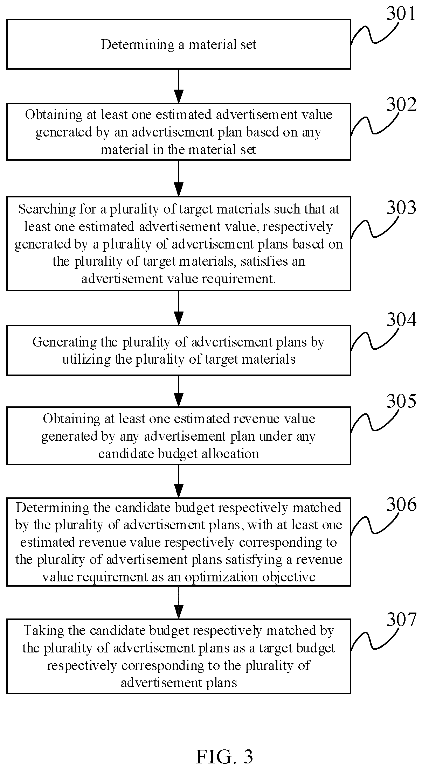

To ensure the rationality of budget allocation under the premise of advertisement plan generation rationality, the inventors thought of determining the reasonably allocated budget for each advertisement plan by taking the advertisement plan as the granularity and performing optimization based on the estimated advertisement revenue and revenue value requirement. Therefore, as shown in FIG. 3, the embodiments of the present application provide a flowchart of another embodiment of an advertisement generation method. The embodiments of the present application can be applied in the system architecture shown in FIG. 2. The technical solution of this embodiment can be specifically executed by the server, and the method may include the following steps:

301: determining a material set.

302: obtaining at least one estimated advertisement value generated by an advertisement plan based on any material in the material set.

303: searching for a plurality of target materials such that at least one estimated advertisement value, respectively generated by a plurality of advertisement plans based on the plurality of target materials, satisfies an advertisement value requirement.

304: generating the plurality of advertisement plans by utilizing the plurality of target materials.

The operations of steps 301 to 304 can be found in detail in the specific implementation of steps 101 to 104 described in the embodiment shown in FIG. 1 and related embodiments, and will not be repeated here.

305: obtaining at least one estimated revenue value generated by any advertisement plan under any candidate budget allocation.

306: determining the candidate budget respectively matched by the plurality of advertisement plans, with at least one estimated revenue value respectively corresponding to the plurality of advertisement plans satisfying a revenue value requirement as an optimization objective.

307: taking the candidate budget respectively matched by the plurality of advertisement plans as a target budget respectively corresponding to the plurality of advertisement plans.

In the embodiments of the present application, by performing optimization based on estimating the revenue value and the preset revenue value requirement, the target budget respectively corresponding to multiple advertisement plans can be determined. Under the target budget constraint, after multiple advertisement plans are delivered, they can very likely satisfy the revenue value requirement. The revenue value requirement can be preset in conjunction with actual needs, etc., thereby ensuring the rationality of budget allocation, guaranteeing advertisement delivery effectiveness, and improving the flexibility and efficiency of advertisement delivery.

In some embodiments, obtaining at least one estimated revenue value generated by any advertisement plan under any candidate budget allocation may include: utilizing at least one revenue estimation model to obtain at least one estimated revenue value generated by any advertisement plan under any candidate budget allocation. Each revenue estimation model may be obtained by training according to a sample advertisement plan, a sample budget corresponding to the sample advertisement plan, and a sample revenue value.

Each revenue estimation model may be used to obtain an estimated revenue value corresponding to a revenue type, which may refer to a click-through rate type, a conversion rate type, an impression type, a daily active user type, a GMV type, or an ROI type, etc.

In some embodiments, utilizing at least one revenue estimation model to obtain at least one estimated revenue value generated by any advertisement plan under any candidate budget allocation may include: determining at least one advertisement feature corresponding to any advertisement plan; inputting the at least one advertisement feature and any candidate budget into at least one revenue estimation model to obtain at least one estimated revenue value generated by the advertisement plan under the candidate budget allocation.

Embodiments of this application can effectively achieve revenue estimation by means of machine learning models. The above revenue estimation model may be a classifier, a support vector machine, various neural network models, or AI (Artificial Intelligence) models, etc., which are not limited herein.

In some embodiments, determining at least one advertisement feature corresponding to any advertisement plan may include: determining at least one average revenue value generated by any advertisement plan during a historical time period; taking one or more of the at least one average revenue value, an audience characteristic corresponding to the advertisement plan, an object characteristic of an advertisement object corresponding to the advertisement plan, and a material characteristic of an advertisement material corresponding to the advertisement plan as the at least one advertisement feature corresponding to the advertisement plan.

For example, the revenue value may be click-through rate, conversion rate, impression, daily active users, GMV, or ROI, etc. The at least one average revenue value generated by the advertisement plan during the historical time period may include one or more of daily average click-through rate, average conversion rate, average impression, average daily active users, average GMV, and average ROI. The audience characteristic corresponding to the advertisement plan may refer to the characteristics of the audience to which the advertisement plan is delivered, such as the number, gender, age, region, and preferences of the audience. The advertisement object corresponding to the advertisement plan may refer to a product, and the object characteristic of the advertisement object may include object attributes such as object category. The material characteristic of the advertisement material corresponding to the advertisement plan may refer to the material form such as video, image, and text, material content type, and material design style, etc.

The revenue value may be the same as or different from the above advertisement value.

In some embodiments, the revenue estimation model may be obtained by training in the following manner: obtaining a historical advertisement plan and a historical budget and a historical revenue value corresponding to the historical advertisement plan; taking the historical advertisement plan as the sample advertisement plan, taking the historical budget as the sample budget, and taking the historical revenue value as the sample revenue value; determining at least one sample advertisement feature of the sample advertisement plan; training the revenue estimation model by taking the at least one sample advertisement feature of the sample advertisement plan and the sample budget as input data, and taking the sample revenue value as a training label.

Embodiments of this application train the revenue estimation model by combining historical data, thereby enabling the revenue estimation model to learn and understand patterns and trends in the data from historical data, and to make accurate predictions for future or unknown data accordingly, thereby improving estimation accuracy.

In some embodiments, the method may further include: obtaining a second test sample; the second test sample includes a test advertisement plan and a test revenue value corresponding to the test advertisement plan; obtaining an estimated revenue value corresponding to the test advertisement plan by utilizing the revenue estimation model; determining whether the revenue estimation model satisfies a model requirement according to the estimated revenue value and the test revenue value; if no, adjusting the revenue estimation model.

If the revenue estimation model satisfies the model requirement, the revenue estimation model can be used to obtain the estimated revenue value generated by any advertisement plan.

The second test sample may also come from historical delivery records. The test advertisement plan may also be a historical advertisement plan, and the test revenue value may also be the historical revenue value generated by the historical advertisement plan.

The model requirement may be that the difference between the estimated revenue value and the test revenue value is within an allowable range. If the revenue estimation model does not meet the model requirement, the revenue estimation model can be adjusted, for example, by returning to the step of training the value estimation model using the sample advertisement plan and the sample revenue value to retrain the revenue estimation model or readjust the training samples.

In addition, first adjustment prompt information may be outputted to prompt the user whether to adjust the revenue estimation model, etc. The first adjustment prompt information may include difference information between the estimated revenue value and the test revenue value, etc. The first adjustment prompt information may be sent to the user terminal for the user terminal to display the first adjustment prompt information in the interactive interface.

In embodiments of this application, by using the second test sample to test the revenue estimation model, the performance and generalization ability of the model can be evaluated, ensuring model accuracy.

In some embodiments, the method may further include: determining a budget candidate set respectively corresponding to a plurality of advertisement plans.

Estimating at least one revenue value generated by any advertisement plan under any candidate budget allocation may include: estimating at least one revenue value generated by any advertisement plan under any candidate budget within its corresponding preset candidate set.

The budget candidate set may be generated from a plurality of preset candidate budgets or generated based on historical budgets.

In some embodiments, budget allocation for advertisement plans may be performed according to delivery cycles, for example, a delivery cycle may be a day, a week, a month, etc. The above determining a budget candidate set respectively corresponding to a plurality of advertisement plans may include: for any advertisement plan, generating a plurality of candidate budgets within a budget range corresponding to the actual budget consumed by the advertisement plan in a previous delivery cycle, so as to constitute the budget candidate set.

Taking the candidate budget respectively matched by the plurality of advertisement plans as the target budget respectively corresponding to the plurality of advertisement plans may include: taking the candidate budget respectively matched by the plurality of advertisement plans as the target budget respectively corresponding to the plurality of advertisement plans in a current delivery cycle.

The method may further include: updating the target budget respectively corresponding to the plurality of advertisement plans in the current delivery cycle to an advertisement delivery system, for the advertisement delivery system to perform advertisement display for the plurality of advertisement plans according to their respective corresponding target budget in the current delivery cycle.

For any advertisement plan, generating a plurality of candidate budgets within a budget range corresponding to the actual budget consumed by the advertisement plan in a previous delivery cycle, so as to constitute the budget candidate set, may involve first setting a budget range, taking the actual budget consumed by the advertisement plan in the previous delivery cycle as one candidate budget, incrementally or decrementally obtaining other candidate budgets from this actual budget until the boundary of the budget range is reached, and then forming the budget candidate set from all candidate budgets.

For example, a delivery cycle may refer to one day, and the budget corresponding to advertisement plan i on day t can be selected from the budget candidate set $S_{t,i}[S_{t-1,i} - d, S_{t-1,i} - (d-1), ..., S_{t-1,i} - 1, S_{t-1,i}, S_{t-1,i} + 1, ..., S_{t-1,i} + d]$, where $S_{t-1,i}$ is the actual budget consumed by advertisement **plan** i on day t-1. The maximum candidate budget in the budget candidate set $S_{t,i}$ is $S_{t-1,i} + d$, which is the actual budget consumed by advertisement plan i on day t-1 plus d. The minimum candidate budget is $S_{t-1,i} - d$, which is the actual budget consumed by advertisement plan i on day t-1 minus d.

In some embodiments, determining the candidate budget respectively matched by the plurality of advertisement plans, with at least one estimated revenue value respectively corresponding to the plurality of advertisement plans satisfying a revenue value requirement as an optimization objective, may include: determining the candidate budget respectively matched by the plurality of advertisement plans, with maximization of a total value corresponding to a first estimated revenue value respectively generated by the plurality of advertisement plans as an optimization objective, and at least one second estimated revenue value respectively generated by the plurality of advertisement plans being within a revenue limit range, and a total budget of the candidate budget respectively corresponding to the plurality of advertisement plans being within a budget limit range as constraint conditions.

The total value corresponding to the first estimated revenue value respectively generated by the plurality of advertisement plans refers to the overall revenue value corresponding to the advertiser, which is obtained by summing the first estimated revenue values of the plurality of advertisement plans.

The total budget of the candidate budget respectively corresponding to the plurality of advertisement plans refers to the overall budget corresponding to the advertiser, which is obtained by summing the candidate budgets of all advertisement plans.

The total budget of the candidate budget respectively corresponding to the plurality of advertisement plans being within a budget limit range may mean that the total budget of the candidate budget respectively corresponding to the plurality of advertisement plans does not exceed a preset total budget.

The first estimated revenue value can be an estimated revenue value of a specified revenue type, such as ROI. The second estimated revenue value can be an estimated revenue value of another specified revenue type different from the first estimated revenue value, such as click-through rate, conversion rate, daily active users, impressions, or GMV. When there are multiple second estimated revenue values, the constraint condition can be that each second estimated revenue value is within its corresponding predetermined revenue range. For example, ROI can be used as the first estimated revenue value, and the total value corresponding to the first estimated revenue value respectively generated by the plurality of advertisement plans is the total ROI of the plurality of advertisement plans. One or more estimated revenue values from click-through rate, conversion rate, impressions, daily active users, and GMV can be used as the at least one second estimated revenue value.

Taking click-through rate, conversion rate, impressions, daily active users, and GMV all as the second estimated revenue values, for example, at least one second estimated revenue value respectively generated by the plurality of advertisement plans being within a revenue limit range may mean that the total value of each second estimated revenue value corresponding to the plurality of advertisement plans is within the revenue limit range. For example, the total click-through rate reaches a second predetermined click-through rate, the total conversion rate reaches a second predetermined conversion rate, the total daily active users reach a second predetermined daily active users, the total impressions reach a second predetermined impressions, and the total GMV reaches a second predetermined GMV. The total value of each second estimated revenue value can be obtained by summing the same second estimated revenue value respectively generated by the plurality of advertisement plans.

The total impressions generated by the plurality of advertisement plans can be obtained by summing the impressions of each advertisement plan. The total click-through rate generated by the plurality of advertisement plans can be obtained by calculating the ratio of the total number of clicks of the plurality of advertisement plans to the total impressions within a unit time. The total conversion rate generated by the plurality of advertisement plans can be obtained by calculating the ratio of the total number of interactive behaviors, such as purchases, corresponding to the advertisement objects of the plurality of advertisement plans to the total impressions within a unit time. The total daily active users generated by the plurality of advertisement plans can be obtained by summing the daily new users attracted by the delivery of each advertisement plan. The total GMV generated by the plurality of advertisement plans can be obtained by summing the GMV generated by each advertisement plan. The total ROI generated by the plurality of advertisement plans can be obtained by calculating the ratio of the total GMV generated by the plurality of advertisement plans to the total budget of the plurality of advertisement plans.

For example, suppose $S_{t,i}$ represents the candidate budget set corresponding to advertisement plan $i$ on day $t$, and $S_{t,ij}$ represents the $j$-th candidate budget in the candidate budget set $S_{t,i}$ corresponding to advertisement plan $i$ on day $t$. In addition, a budget selection matrix $A$ can be established, where $A_{ij} = 1$ means that advertisement plan $i$ selects the $j$-th candidate budget in the candidate budget set $S_{t,i}$, and $A_{ij} = 0$ means that advertisement plan $i$ does not select the $j$-th candidate budget in the candidate budget set $S_{t,i}$. A first revenue estimation matrix $R$ can be established, where $R_{ij}$ represents the first estimated revenue value corresponding to advertisement plan $i$ selecting the $j$-th candidate budget. A second estimated revenue matrix $O$ can be established, for example, there may be k second estimated revenue values

$$O_{ij}^1, ..., O_{ij}^k$$ , where $O_{ij}^1$ represents the first second estimated revenue value corresponding to advertisement plan $i$ selecting the $j$-th candidate budget, and

$$O_{ij}^k$$ represents the k-th second estimated revenue value corresponding to advertisement plan $i$ selecting the $j$-th candidate budget. Then, the target budget respectively matched by the plurality of advertisement plans can be solved according to the following objective function:

$$\max \ \sum_i \sum_j R_{ij} \cdot A_{ij}$$

$$\sum_j A_{ij} = 1, \forall i$$

$$\sum_i \sum_j S_{t,ij} \cdot A_{ij} \leq \text{total budget}$$

$$\sum_i \sum_j O_{ij}^1 \cdot A_{ij} \geq \text{first revenue limit}$$

$$\bullet \ \bullet \ \bullet$$

$$\sum_i \sum_j O_{ij}^k \cdot A_{ij} \geq \text{k-th revenue limit}$$

where $\sum_j A_{ij} = 1$ means that each advertisement plan selects one candidate budget from its corresponding candidate budget set. With the maximization of the total value corresponding to the first estimated revenue value respectively generated by the plurality of advertisement plans, $\sum_i \sum_j R_{ij} \cdot A_{ij}$, as the optimization objective, and the total value corresponding to the $k$-th second estimated revenue value respectively generated by the plurality of advertisement plans, $\sum_i \sum_j O_{ij}^k \cdot A_{ij}$, being within the $k$-th revenue limit range, and the total budget of the candidate budget respectively corresponding to the plurality of advertisement plans, $\sum_i \sum_j S_{t,ij} \cdot A_{ij}$, being within a predetermined total budget as constraint conditions, the solution is performed to determine the candidate budget respectively matched by the plurality of advertisement plans. For example, branch-and-cut method can be used for solving, which is not limited herein.

In some embodiments, the method may further include: obtaining at least one revenue value generated by any advertisement plan in the advertisement delivery system within a predetermined time; detecting whether the at least one revenue value satisfies a first revenue evaluation requirement; if no, taking an actual budget of a previous delivery cycle of the advertisement plan as the target budget of a current delivery cycle, and updating it to the advertisement delivery system.

The at least one revenue value may include one or more of click-through rate, conversion rate, impressions, daily active users, GMV, and ROI. The first revenue evaluation requirement may include revenue conditions corresponding to each revenue requirement. For example, it may include whether the click-through rate reaches a first predetermined click-through rate, whether the conversion rate reaches a first predetermined conversion rate, whether the impressions reach a first predetermined impressions, whether the daily active users reach a first predetermined daily active users, whether the GMV reaches a first predetermined GMV, and whether the ROI reaches a first predetermined ROI, etc.

Therefore, detecting whether the at least one revenue value satisfies the revenue evaluation requirement may include detecting whether the click-through rate reaches the first predetermined click-through rate, whether the conversion rate reaches the first predetermined conversion rate, whether the impressions reach the first predetermined impressions, whether the daily active users reach the first predetermined daily active users, whether the GMV reaches the first predetermined GMV, and whether the ROI reaches the first predetermined ROI, etc.

If any revenue value among the at least one revenue value does not satisfy the corresponding revenue condition, for example, the actual budget $S_{t-1,i}$ consumed by advertisement plan $i$ on day $t-1$ can be used as the budget corresponding to advertisement plan $i$ on day $t$.

In some embodiments, the method may further include:

providing an interactive interface to a user terminal; determining a plurality of advertisement plans provided by a user according to interactive information sent by the user terminal.

In addition, the user may also specify a revenue type through the interactive interface to facilitate the determination of the estimation target, etc. Therefore, in some embodiments, the method may include: obtaining the plurality of advertisement plans and at least one revenue type sent by the user terminal; the at least one revenue type being provided by the user in the interactive interface.

The above obtaining at least one estimated revenue value generated by any advertisement plan under any candidate budget allocation may include: obtaining at least one estimated revenue value generated by any advertisement plan under any candidate budget allocation based on at least one revenue type.

The at least one revenue type may include one or more of ROI type, GMV type, daily active user type, impression type, conversion rate type, and click-through rate type.

In some possible implementations, the server may send advertisement selection prompt information to the user terminal for the user terminal to display the advertisement selection prompt information in the interactive interface. The advertisement selection prompt information may include input controls for perceiving the plurality of advertisement plans set by the user, or the advertisement selection prompt information may include an advertisement plan list and selection controls for perceiving the plurality of advertisement plans selected by the user in the advertisement plan list, but the embodiments of this application are not limited thereto.

In addition, the server may send revenue type prompt information to the user for the user terminal to display the revenue type prompt information in the interactive interface. The revenue type prompt information may include input controls for perceiving at least one revenue type entered by the user, or the revenue type prompt information may include a plurality of revenue types and selection controls for perceiving at least one revenue type selected by the user from the plurality of revenue types, but the embodiments of this application are not limited thereto.

In order to ensure the accuracy of the estimation results and the final delivery effect, in some embodiments, the method may further include:

delivering a plurality of advertisement plans in a simulation system according to the target budget, and obtaining at least one simulated revenue value generated by the plurality of advertisement plans; determining whether the at least one simulated revenue value satisfies a second revenue evaluation requirement; if yes, delivering the plurality of advertisement plans to an advertisement delivery system; if no, outputting warning prompt information.

The second revenue evaluation requirement can be set in combination with actual needs, etc., to evaluate each simulated revenue value of each advertisement plan, or the comprehensive value of at least one simulated revenue value corresponding to each advertisement plan, or the total value of each simulated revenue value of multiple advertisement plans. The comprehensive value can be obtained by weighted processing, and the total value can be obtained by summation or weighted summation. For example, if the at least one simulated revenue value includes ROI, GMV, or conversion rate, the second revenue evaluation requirement can be that the ROI, GMV, or conversion rate of each advertisement plan reaches a specified evaluation threshold, or the total ROI, total GMV, or total conversion rate corresponding to multiple advertisement plans reaches a specified evaluation threshold, or the comprehensive value of each advertisement plan reaches a specified evaluation threshold, etc. Certainly, it can also be set based on revenue value requirements, etc., which are not limited herein.

The at least one simulated revenue value may have the same revenue type as the at least one estimated revenue value, or different revenue types of revenue values may be used for verification and evaluation.

If each advertisement plan satisfies the second revenue evaluation requirement, the plurality of advertisement plans can be delivered to the advertisement delivery system. Otherwise, if any advertisement plan does not satisfy the second revenue evaluation requirement, warning prompt information can be outputted.

Optionally, outputting the warning prompt information may involve sending the warning prompt information to the user terminal for the user terminal to display the warning prompt information in the interactive interface. The warning prompt information can be used to notify the user that the plurality of advertisement plans failed verification, etc. In addition, it may also include at least one simulated revenue value corresponding to each advertisement plan, so that the user can analyze the reason and readjust the advertisement plan and/or revenue type.

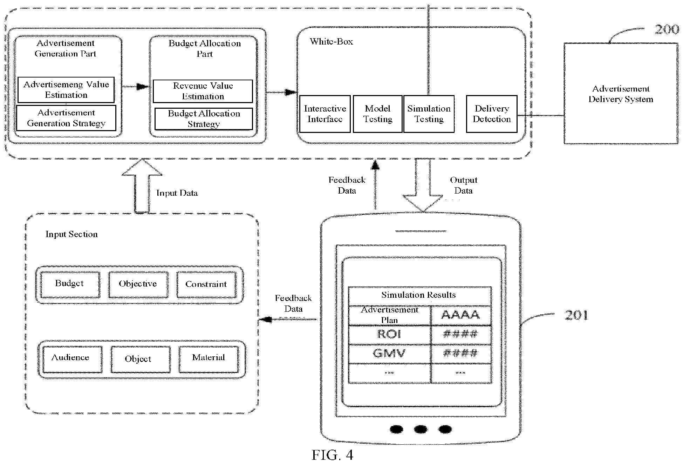

For ease of understanding, as shown in FIG. 4, a conceptual schematic diagram of an advertisement processing process according to an embodiment of this application is shown, which may include:

> input part: a user can provide materials (target audience, advertisement object, and/or advertisement material), evaluation targets (value type and revenue type), constraint conditions, total budget, etc., through the interactive interface of the user terminal 201.
> advertisement generation part: the server can perform advertisement value estimation based on the material set and value type in the input data, and search for a plurality of target materials based on the obtained estimated advertisement value to generate corresponding advertisement plans by utilizing the plurality of target materials; the specific implementation can be found in the relevant embodiments described above, and will not be repeated here.
> budget allocation part: the server can estimate at least one estimated revenue value generated by any advertisement plan under any candidate budget allocation based on at least one revenue type in the input data, and determine the target budget respectively corresponding to the plurality of advertisement plans by optimization based on the constraint conditions and total budget in the input data; the specific implementation can be found in the relevant embodiments described above, and will not be repeated here.

In addition, a product processing system provided by the embodiments of this application is a white-box system, which realizes algorithm processing through a white-box method. The white-box method may include a visualized interactive interface, model testing, simulation testing, and delivery detection, etc., and generates corresponding prompt information as output data to interact with the user to enhance the controllability of advertisements. In addition, after delivering a plurality of advertisement plans in the simulation system 203, the white-box system can also output at least one simulated revenue value and at least one simulated advertisement value generated by the plurality of advertisement plans to the user terminal 201 as output data. After delivering a plurality of advertisement plans in the advertisement delivery system 200, the white-box system can also output at least one revenue value and at least one advertisement value generated by the plurality of advertisement plans to the user terminal 201 as output data. For example, as shown in FIG. 4, the white-box system can output to the user terminal 201 at least one simulated revenue value such as ROI and GMV generated by delivering an advertisement plan with ID "AAAA" in the simulation system 203, and display it in the interactive interface of the user terminal 201. Furthermore, the interactive results of the user regarding the prompt information can be used as feedback data to make corresponding adjustments to the input data, advertisement generation algorithm, budget allocation algorithm, and/or user's input data.

Furthermore, after generating a plurality of advertisement plans, corresponding interfaces can be called to deliver them to the advertisement delivery system 200, and the target budget for each advertisement plan can be determined and updated to the advertisement delivery system in each delivery cycle, e.g., daily. The historical delivery records generated by the advertisement delivery system can then be used as real data to participate in the construction of the simulation system, advertisement value estimation, or revenue value estimation, etc.

Through the technical solution of the embodiments of this application, based on the materials provided by the user and the value type as the optimization objective, and by estimating the advertisement value, a plurality of target materials satisfying the optimization objective can be found. Then, an advertisement plan can be generated based on each target material. After the plurality of advertisement plans generated from the plurality of target materials are delivered, they can largely satisfy the advertisement value requirement, which can be preset in combination with actual advertisement generation needs or delivery effect needs, thereby ensuring the rationality of advertisement plan generation. Moreover, by estimating the revenue value of the advertisement plan and optimizing based on the revenue value requirement set according to the revenue type provided by the user, the target budget corresponding to each of the plurality of advertisement plans can be determined. Under the target budget constraint, after the plurality of advertisement plans are delivered, they can largely satisfy the revenue value requirement, which can be preset in combination with actual needs, thereby ensuring the rationality of budget allocation, guaranteeing advertisement delivery effect, and improving the flexibility and efficiency of advertisement delivery.

Among them, through simulation evaluation, delivery feedback, and a visualized interactive interface, etc., the algorithm is white-boxed, which facilitates user interaction and corresponding adjustments, enhances the controllability of the results, and meets the usage requirements of upstream and downstream.

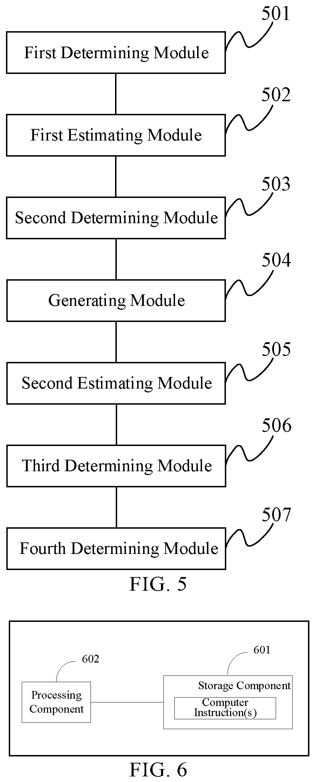

FIG. 5 is a schematic structural diagram of an embodiment of an advertisement generation apparatus according to an embodiment of the present application. The apparatus includes:

a first determining module 501, configured to determine a material set;

a first estimating module 502, configured to obtain at least one estimated advertisement value generated by an advertisement plan based on a material in the material set;

a second determining module 503, configured to search for a plurality of target materials such that at least one estimated advertisement value, respectively generated by a plurality of advertisement plans based on the plurality of target materials, satisfies an advertisement value requirement;

a generating module 504, configured to generate the plurality of advertisement plans by utilizing the plurality of target materials;

a second estimating module 505, configured to obtain at least one estimated revenue value generated by any advertisement plan under any candidate budget allocation;

a third determining module 506, configured to determine the candidate budget respectively matched by the plurality of advertisement plans, with at least one estimated revenue value respectively corresponding to the plurality of advertisement plans satisfying a revenue value requirement as an optimization objective;

a fourth determining module 507, configured to take the candidate budget respectively matched by the plurality of advertisement plans as a target budget respectively corresponding to the plurality of advertisement plans.

In some embodiments, the first estimating module obtaining at least one estimated advertisement value generated by an advertisement plan based on any material in the material set may include: utilizing at least one value estimation model to obtain at least one estimated advertisement value generated by an advertisement plan based on any material in the material set.

The value estimation model may be obtained by training according to a sample material and a sample advertisement value corresponding to the sample material.

In some embodiments, the value estimation model may be obtained by training in the following manner: determining a historical advertisement plan and a historical advertisement value generated by the historical advertisement plan; taking a material involved in the historical advertisement plan as the sample material, and taking the historical advertisement value as the sample advertisement value; training the value estimation model by utilizing the sample material and the sample advertisement value.

In some embodiments, the apparatus may further: weight at least one estimated advertisement value corresponding to any material to generate a material value corresponding to the material.

After obtaining the material value, in one implementation, the second determining module searching for a plurality of target materials such that at least one estimated advertisement value, respectively generated by a plurality of advertisement plans based on the plurality of target materials, satisfies an advertisement value requirement may be: searching for a plurality of target materials such that the difference between the material values respectively corresponding to the plurality of target materials satisfies an advertisement value requirement.

As another implementation, the second determining module searching for a plurality of target materials such that at least one estimated advertisement value, respectively generated by a plurality of advertisement plans based on the plurality of target materials, satisfies an advertisement value requirement may be: searching for at least two target materials respectively matched by the plurality of advertisement plans, with a material value difference between materials in a same advertisement plan satisfying a difference requirement as an optimization objective. This implementation can ensure the homogeneity of at least two target materials in the plurality of advertisement plans.

In addition, as yet another implementation, materials in the material set can also be grouped using different partitioning methods, and the materials in the same group are used as target materials to generate a corresponding advertisement plan. The plurality of advertisement plans corresponding to each group can be considered as advertisement plans that satisfy the advertisement value requirement.

Furthermore, to ensure delivery efficiency and delivery effect, etc., the advertisement value requirement may include an optimization objective and constraint conditions, etc. For example, the optimization objective may be that the difference between one or more estimated advertisement values respectively corresponding to the plurality of advertisement plans generated by the plurality of target materials satisfies a difference requirement, and the constraint conditions may include that the number of advertisement plans is a target number, and the total sum of one estimated value corresponding to the plurality of advertisement plans is within a predetermined value range, etc.

In some embodiments, the second determining module searching for a plurality of target materials such that at least one estimated advertisement value, respectively generated by a plurality of advertisement plans based on the plurality of target materials, satisfies an advertisement value requirement may include: solving for the target materials respectively matched by the plurality of advertisement plans, with a difference between a first estimated advertisement value respectively generated by the plurality of advertisement plans satisfying an advertisement value requirement as an optimization objective, and a second estimated advertisement value respectively generated by the plurality of advertisement plans or a total sum of the second estimated advertisement values being within a predetermined value range as a constraint condition.

In some embodiments, the apparatus may be further configured to: provide an interactive interface to a user terminal for a user to provide the material set in the interactive interface; obtaining the material set sent by the user terminal.

In addition, the user can also specify the value type through the interactive interface to facilitate the determination of the estimation target, etc. Therefore, in some embodiments, it can be: obtaining the material set and at least one value type sent by the user terminal; the at least one value type being provided by the user in the interactive interface.

The estimating module obtaining at least one estimated advertisement value generated by an advertisement plan based on any material in the material set may include: obtaining at least one estimated advertisement value corresponding to the at least one advertisement value type, generated by an advertisement plan based on any material in the material set.

In some possible implementations, the apparatus may send material prompt information to the user terminal for the user terminal to display the material prompt information in the interactive interface. In addition, the apparatus may send value type prompt information to the user for the user terminal to display the value type prompt information in the interactive interface.

In some embodiments, the apparatus may further be used for: delivering a plurality of advertisement plans in a simulation system, and obtaining at least one simulated advertisement value respectively generated by the plurality of advertisement plans; determining whether all of the at least one simulated advertisement value respectively generated by the plurality of advertisement plans satisfy a first value evaluation requirement; if yes, delivering the plurality of advertisement plans to an advertisement delivery system; if no, outputting first prompt information.

In some embodiments, the apparatus may further: deliver the plurality of advertisement plans to an advertisement delivery system; obtain at least one advertisement value generated by any advertisement plan in the advertisement delivery system within a predetermined time; detect whether the at least one advertisement value satisfies a second value evaluation requirement; if no, output second prompt information.

In some embodiments, the apparatus may further be used for: obtaining a first test sample, wherein the first test sample includes a test advertisement plan and a test advertisement value corresponding to the test advertisement plan; obtaining an estimated advertisement value corresponding to the test advertisement plan by utilizing the value estimation model; determining whether the value estimation model satisfies a model requirement according to the estimated advertisement value and the test advertisement value; if no, adjusting the value estimation model.

In addition, the apparatus may also output adjustment prompt information to prompt the user whether to adjust the value estimation model, etc. The adjustment prompt information may include difference information between the estimated advertisement value and the test advertisement value, etc. The adjustment prompt information may be sent to the user terminal for the user terminal to display the adjustment prompt information in the interactive interface.

In some embodiments, the second estimating module obtaining at least one estimated revenue value generated by any advertisement plan under any candidate budget allocation may include: utilizing at least one revenue estimation model to obtain at least one estimated revenue value generated by any advertisement plan under any candidate budget allocation. Each revenue estimation model may be obtained by training according to a sample advertisement plan, a sample budget corresponding to the sample advertisement plan, and a sample revenue value.

In some embodiments, utilizing at least one revenue estimation model to obtain at least one estimated revenue value generated by any advertisement plan under any candidate budget allocation may include: determining at least one advertisement feature corresponding to any advertisement plan; inputting the at least one advertisement feature and any candidate budget into at least one revenue estimation model to obtain at least one estimated revenue value generated by the advertisement plan under the candidate budget allocation.

In some embodiments, determining at least one advertisement feature corresponding to any advertisement plan may include: determining at least one average revenue value generated by any advertisement plan during a historical time period; taking one or more of the at least one average revenue value, an audience characteristic corresponding to the advertisement plan, an object characteristic of an advertisement object corresponding to the advertisement plan, and a material characteristic of an advertisement material corresponding to the advertisement plan as the at least one advertisement feature corresponding to the advertisement plan.

In some embodiments, the revenue estimation model may be obtained by training in the following manner: obtaining a historical advertisement plan and a historical budget and a historical revenue value corresponding to the historical advertisement plan; taking the historical advertisement plan as the sample advertisement plan, taking the historical budget as the sample budget, and taking the historical revenue value as the sample revenue value; determining at least one sample advertisement feature of the sample advertisement plan; training the revenue estimation model by taking the at least one sample advertisement feature of the sample advertisement plan and the sample budget as input data, and taking the sample revenue value as a training label.

In some embodiments, the apparatus may further be used for: obtaining a second test sample; the second test sample includes a test advertisement plan and a test revenue value corresponding to the test advertisement plan; obtaining an estimated revenue value corresponding to the test advertisement plan by utilizing the revenue estimation model; determining whether the revenue estimation model satisfies a model requirement according to the estimated revenue value and the test revenue value; if no, adjusting the revenue estimation model.

In addition, the apparatus may also output first adjustment prompt information to prompt the user whether to adjust the revenue estimation model, etc. The first adjustment prompt information may include difference information between the estimated revenue value and the test revenue value, etc. The first adjustment prompt information may be sent to the user terminal for the user terminal to display the first adjustment prompt information in the interactive interface.

In some embodiments, the apparatus may further: determine a budget candidate set respectively corresponding to a plurality of advertisement plans.

The second estimating module obtaining at least one estimated revenue value generated by any advertisement plan under any candidate budget allocation may include: obtaining at least one estimated revenue value generated by any advertisement plan under any candidate budget within its corresponding budget candidate set.

The above determining a budget candidate set respectively corresponding to a plurality of advertisement plans may include: for any advertisement plan, generating a plurality of candidate budgets within a budget range corresponding to an actual budget consumed by the advertisement plan in a previous delivery cycle, so as to constitute the budget candidate set.

Taking the candidate budget respectively matched by the plurality of advertisement plans as the target budget respectively corresponding to the plurality of advertisement plans may include: taking the candidate budget respectively matched by the plurality of advertisement plans as the target budget respectively corresponding to the plurality of advertisement plans in a current delivery cycle.

The apparatus may further: update the target budget respectively corresponding to the plurality of advertisement plans in the current delivery cycle to an advertisement delivery system, for the advertisement delivery system to perform advertisement display for the plurality of advertisement plans according to their respective corresponding target budget in the current delivery cycle.

In some embodiments, the third determining module determining the candidate budget respectively matched by the plurality of advertisement plans, with at least one estimated revenue value respectively corresponding to the plurality of advertisement plans satisfying a revenue value requirement as an optimization objective, may include: determining the candidate budget respectively matched by the plurality of advertisement plans, with maximization of a total value corresponding to a first estimated revenue value respectively generated by the plurality of advertisement plans as an optimization objective, and at least one second estimated revenue value respectively generated by the plurality of advertisement plans being within a revenue limit range, and a total budget of the candidate budget respectively corresponding to the plurality of advertisement plans being within a budget limit range as constraint conditions.

In some embodiments, the apparatus may further: obtain at least one revenue value generated by any advertisement plan in the advertisement delivery system within a predetermined time; detect whether the at least one revenue value satisfies a first revenue evaluation requirement; if no, take an actual budget of a previous delivery cycle of the advertisement plan as the target budget of a current delivery cycle, and update it to the advertisement delivery system.

In some embodiments, the apparatus may further: provide an interactive interface to a user terminal; determine a plurality of advertisement plans provided by the user according to the interactive information sent by the user terminal.

In some possible implementations, the apparatus may send advertisement selection prompt information to the user terminal for the user terminal to display the advertisement selection prompt information in the interactive interface. In addition, the apparatus may send revenue type prompt information to the user for the user terminal to display the revenue type prompt information in the interactive interface.

In some embodiments, the apparatus may further: deliver a plurality of advertisement plans in a simulation system according to the target budget, and obtain at least one simulated revenue value generated by the plurality of advertisement plans; determine whether the at least one simulated revenue value satisfies a second revenue evaluation requirement; if yes, deliver the plurality of advertisement plans to an advertisement delivery system; if no, output warning prompt information.

The advertisement generation apparatus shown in FIG. 5 can execute the advertisement generation method described in the embodiment shown in FIG. 3, and its implementation principle and technical effects will not be repeated. For the specific operation methods of each module and unit in the advertisement generation apparatus in the above embodiments, detailed descriptions have been given in the embodiments related to the method, and detailed explanations will not be given here.

The embodiments of this application also provide a computing device, as shown in FIG. 6, which may include a storage component 601 and a processing component 602.

The storage component 601 stores one or more computer instructions, wherein the one or more computer instructions are used to be called and executed by the processing component to implement the advertisement generation method described in the embodiments shown in FIG. 1 or FIG. 3.

Certainly, the computing device must also include other components, such as input/output interfaces, display components, communication components, etc.

The input/output interface provides an interface between the processing component and peripheral interface modules, and the peripheral interface modules can be output devices, input devices, etc. The communication component is configured to facilitate wired or wireless communication between the computing device and other devices.

The processing component 602 may include one or more processors to execute computer instructions to complete all or part of the steps in the above method. Certainly, the processing component can also be implemented as one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic elements to execute the above method.

The storage component 601 is configured to store various types of data to support operations in the terminal. The storage component can be implemented by any type of volatile or non-volatile storage device or a combination thereof, such as static random-access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The display component can be an electroluminescent (EL) element, a liquid crystal display, or a microdisplay with a similar structure, or a retinal direct display or similar laser scanning display.

It should be noted that when the above computing device implements the advertisement generation method described in the embodiment shown in FIG. 1 or FIG. 3, it can be a physical device or an elastic computing host provided by a cloud computing platform. It can be implemented as a distributed cluster composed of multiple servers or terminal devices, or as a single server or a single terminal device.

It should be noted that the above computing device can be a physical device or an elastic computing host provided by a cloud computing platform. It can be implemented as a distributed cluster composed of multiple servers or terminal devices, or as a single server or a single terminal device.

The embodiments of this application also provide a computer-readable storage medium storing a computer program, wherein the computer program, when executed by a computer, can implement the advertisement generation method described in the embodiments shown in FIG. 1 or FIG. 3. The computer-readable medium can be included in the electronic device described in the above embodiments; it can also exist independently and not be assembled into the electronic device.

The embodiments of this application also provide a computer program product comprising a computer program carried on a computer-readable storage medium, wherein the computer program, when executed by a computer, can implement the advertisement generation method described in the embodiments shown in FIG. 1 or FIG. 3. In such embodiments, the computer program can be downloaded and installed from a network, and/or installed from a removable medium. When the computer program is executed by a processor, various functions defined in the system of this application are performed. Those skilled in the art can clearly understand that, for convenience and conciseness of description, the specific working process of the system, apparatus, and units described above can refer to the corresponding process in the previous method embodiments, which will not be repeated here.

The apparatus embodiments described above are merely illustrative, in which the units described as separate components may or may not be physically separate, and the components displayed as units may or may not be physical units, i.e., they can be located in one place, or can be distributed over multiple network units. Some or all of the modules can be selected according to actual needs to achieve the purpose of the embodiment. Ordinary technicians in the field can understand and implement without creative labor.

Through the description of the above implementation modes, those skilled in the art can clearly understand that each implementation mode can be realized with the help of software plus the necessary general hardware platform, and certainly, it can also be realized through hardware. Based on this understanding, the technical solutions of the present invention that are essential or contribute to the prior art can be embodied in the form of a software product, which can be stored in a computer-readable storage medium, such as ROM/-

RAM, magnetic disk, optical disk, etc., including several instructions to enable a computer device (which can be a personal computer, server, or network device, etc.) to execute the methods described in the various embodiments or certain parts of the embodiments.

Finally, it should be noted that: the above embodiments are only used to explain the technical solutions of this application, not to limit them; although the present application has been described in detail with reference to the foregoing embodiments, ordinary technicians in the field should understand: they can still modify the technical solutions recorded in the foregoing embodiments, or replace some technical features equivalently; these modifications or replacements do not make the essence of the corresponding technical solutions deviate from the spirit and scope of the technical solutions of each embodiment of this application.

**Claims**

1. A method for generating an advertisement, comprising:

   determining a material set;
   obtaining at least one estimated advertisement value generated by an advertisement plan based on any material in the material set;
   searching for a plurality of target materials such that at least one estimated advertisement value, respectively generated by a plurality of advertisement plans based on the plurality of target materials, satisfies an advertisement value requirement; and
   generating the plurality of advertisement plans by utilizing the plurality of target materials.

2. The method according to claim 1, wherein obtaining at least one estimated advertisement value generated by an advertisement plan based on any material in the material set comprises:

   obtaining at least one estimated advertisement value generated by an advertisement plan based on any material in the material set by utilizing at least one value estimation model, wherein the value estimation model is obtained by training according to a sample material and a sample advertisement value corresponding to the sample material, and,
   optionally,
   wherein the value estimation model is obtained by training in the following manner:

      determining a historical advertisement plan and a historical advertisement value generated by the historical advertisement plan;
      taking a material involved in the historical advertisement plan as the sample material, and taking the historical advertisement value as the sample advertisement value; and training the value estimation model by utilizing the sample material and the sample advertisement value, and,
   further optionally,
   obtaining a first test sample, wherein the first test sample comprises a test advertisement plan and a test advertisement value corresponding to the test advertisement plan;
   obtaining an estimated advertisement value corresponding to the test advertisement plan by utilizing the value estimation model;
   determining whether the value estimation model satisfies a model requirement according to the estimated advertisement value and the test advertisement value;
   if no, adjusting the value estimation model.

3. The method according to claim 1, wherein searching for a plurality of target materials such that at least one estimated advertisement value, respectively generated by a plurality of advertisement plans based on the plurality of target materials, satisfies an advertisement value requirement comprises:
   solving for the target materials respectively matched by the plurality of advertisement plans, with a first estimated advertisement value respectively generated by the plurality of advertisement plans satisfying the advertisement value requirement as an optimization objective, and a second estimated advertisement value respectively generated by the plurality of advertisement plans being within a predetermined value range as a constraint condition.

4. The method according to claim 1, further comprising:

   weighting at least one estimated advertisement value corresponding to any material to generate a material value corresponding to the material;
   wherein searching for a plurality of target materials such that at least one estimated advertisement value, respectively generated by a plurality of advertisement plans based on the plurality of target materials, satisfies an advertisement value requirement comprises:

      searching for a plurality of target materials such that the material value respectively corresponding to the plurality of target materials satisfies the advertisement value requirement;
      or, wherein searching for a plurality of target materials such that at least one estimated advertisement value, respectively generated by a plurality of advertisement plans based on the plurality of target materials, satisfies the advertisement value requirement comprises:

searching for at least two target materials respectively matched by the plurality of advertisement plans, with a material value difference between materials in a same advertisement plan satisfying a difference requirement as an optimization objective.

5. The method according to claim 1, further comprising:

providing an interactive interface to a user terminal for a user to provide the material set and at least one advertisement value type in the interactive interface;
obtaining the material set and the at least one advertisement value type sent by the user terminal;
wherein obtaining at least one estimated advertisement value generated by an advertisement plan based on any material in the material set comprises:
obtaining at least one estimated advertisement value corresponding to the at least one advertisement value type, generated by an advertisement plan based on any material in the material set.

6. The method according to claim 1, further comprising:

delivering the plurality of advertisement plans in a simulation system, and obtaining at least one simulated advertisement value respectively generated by the plurality of advertisement plans;
determining whether all of the at least one simulated advertisement value respectively generated by the plurality of advertisement plans satisfy a first value evaluation requirement;
if yes, delivering the plurality of advertisement plans to an advertisement delivery system;
if no, outputting first prompt information, or, further comprising:

delivering the plurality of advertisement plans to an advertisement delivery system;
obtaining at least one advertisement value generated by any advertisement plan in the advertisement delivery system within a predetermined time;
detecting whether the at least one advertisement value satisfies a second value evaluation requirement;
if no, outputting second prompt information.

7. The method according to claim 1, further comprising:

obtaining at least one estimated revenue value generated by any advertisement plan under any candidate budget allocation;
determining a candidate budget respectively matched by the plurality of advertisement plans, with at least one estimated revenue value respectively corresponding to the plurality of advertisement plans satisfying a revenue value requirement as an optimization objective; and
taking the candidate budget respectively matched by the plurality of advertisement plans as a target budget respectively corresponding to the plurality of advertisement plans.

8. The method according to claim 7, wherein obtaining at least one estimated revenue value generated by any advertisement plan under any candidate budget allocation comprises:

obtaining at least one estimated revenue value generated by any advertisement plan under any candidate budget allocation by utilizing at least one revenue estimation model;
wherein the revenue estimation model is obtained by training according to a sample advertisement plan, a sample budget corresponding to the sample advertisement plan, and a sample revenue value, and,
optionally,
wherein obtaining at least one estimated revenue value generated by any advertisement plan under any candidate budget allocation by utilizing at least one revenue estimation model comprises:

determining at least one advertisement feature corresponding to any advertisement plan;
inputting the at least one advertisement feature and any candidate budget into at least one revenue estimation model to obtain at least one estimated revenue value generated by the advertisement plan under the candidate budget allocation, and,
further optionally,
wherein determining at least one advertisement feature corresponding to any advertisement plan comprises:

determining at least one average revenue value generated by any advertisement plan during a historical time period;
taking one or more of the at least one average revenue value, an audience characteristic corresponding to the advertisement plan, an object characteristic of an advertisement object corresponding to the advertisement plan, and a material characteristic of an advertisement material corresponding to the advertisement plan as the at least one advertisement feature corresponding to the advertisement plan, or, further optionally, wherein the revenue estimation model is obtained by training in the following manner:

obtaining a historical advertisement plan and a historical budget and a historical revenue value corresponding to the historical advertisement plan; taking the historical advertisement plan as the sample advertisement plan, taking the historical budget as the sample budget, and taking the historical revenue value as the sample revenue value; determining at least one sample advertisement feature of the sample advertisement plan; and training the revenue estimation model by taking the at least one sample advertisement feature of the sample advertisement plan and the sample budget as input data, and taking the sample revenue value as a training label.

9. The method according to claim 7, further comprising:

determining a budget candidate set respectively corresponding to the plurality of advertisement plans; wherein obtaining at least one estimated revenue value generated by any advertisement plan under any candidate budget allocation comprises: obtaining at least one estimated revenue value generated by any advertisement plan under any candidate budget within a corresponding preset candidate set, and, optionally, wherein determining the budget candidate set respectively corresponding to the plurality of advertisement plans comprises:

for any advertisement plan, generating a plurality of candidate budgets within a budget range corresponding to an actual budget consumed by the advertisement plan in a previous delivery cycle, so as to constitute the budget candidate set; wherein taking the candidate budget respectively matched by the plurality of advertisement plans as the target budget respectively corresponding to the plurality of advertisement plans comprises:

taking the candidate budget respectively matched by the plurality of advertisement plans as the target budget respectively corresponding to the plurality of advertisement plans in a current delivery cycle; wherein the method further comprises:

updating the target budget respectively corresponding to the plurality of advertisement plans in the current delivery cycle to an advertisement delivery system, for the advertisement delivery system to perform promotion operations for the plurality of advertisement plans according to their respective corresponding target budget in the current delivery cycle.

10. The method according to claim 7, wherein determining the candidate budget respectively matched by the plurality of advertisement plans, with at least one estimated revenue value respectively corresponding to the plurality of advertisement plans satisfying a revenue value requirement as an optimization objective, comprises:

determining the candidate budget respectively matched by the plurality of advertisement plans, with maximization of a total value corresponding to a first estimated revenue value respectively generated by the plurality of advertisement plans as an optimization objective, and at least one second estimated revenue value respectively generated by the plurality of advertisement plans being within a value limit range, and a total budget of the candidate budget respectively corresponding to the plurality of advertisement plans being within a budget limit range as constraint conditions, and, optionally, providing an interactive interface to a user terminal for a user to provide at least one revenue type and the constraint conditions in the interactive interface; obtaining the at least one revenue type and the constraint conditions sent by the user terminal.

11. The method according to claim 7, further comprising:

updating the target budget respectively corresponding to the plurality of advertisement plans to an advertisement delivery system, so that the advertisement delivery system performs promotion operations for the plurality of advertisement plans according to their respective corresponding target budget;

obtaining at least one revenue value generated by any advertisement plan in the advertisement delivery system within a predetermined time;

detecting whether the at least one revenue value satisfies a first revenue evaluation requirement;

if no, taking an actual budget of a previous delivery cycle of the advertisement plan as the target budget of a current delivery cycle, and updating it to the advertisement delivery system.

12. The method according to claim 7, further comprising:

delivering the plurality of advertisement plans in a simulation system according to the target budget, and obtaining at least one simulated revenue value generated by the plurality of advertisement plans;

determining whether the at least one simulated revenue value satisfies a second revenue evaluation requirement;

if yes, delivering the plurality of advertisement plans to an advertisement delivery system;

if no, generating warning prompt information.

13. A computing device, comprising:

a processing component; and

a storage component, wherein the storage component stores one or more computer instructions;

wherein the one or more computer instructions are used to be called and executed by the processing component to implement the method for generating an advertisement as claimed in claim 1.

14. A computer storage medium, storing a computer program, wherein the computer program, when executed by a computer, implements the method for generating an advertisement as claimed in claim 1.

15. A computer program product, comprising a computer program/instruction, wherein the computer program/instruction, when executed by a computer, implements the method for generating an advertisement as claimed in claim 1.

| Determining a material set | 101 |

| Obtaining at least one estimated advertisement value generated by an advertisement plan based on any material in the material set | 102 |

| Searching for a plurality of target materials such that at least one estimated advertisement value, respectively generated by a plurality of advertisement plans based on the plurality of target materials, satisfies an advertisement value requirement | 103 |

| Generating the plurality of advertisement plans by utilizing the plurality of target materials. | 104 |

FIG. 1

FIG. 2

```
┌─────────────────────────────────────────────┐
│         Determining a material set          │ ⟩ 301
└─────────────────────────────────────────────┘
                      │
                      ▼
┌─────────────────────────────────────────────┐
│ Obtaining at least one estimated advertisement value │ ⟩ 302
│ generated by an advertisement plan based on any      │
│         material in the material set                 │
└─────────────────────────────────────────────┘
                      │
                      ▼
┌─────────────────────────────────────────────┐
│ Searching for a plurality of target materials such that at │ ⟩ 303
│ least one estimated advertisement value, respectively      │
│ generated by a plurality of advertisement plans based on   │
│    the plurality of target materials, satisfies an         │
│         advertisement value requirement.                   │
└─────────────────────────────────────────────┘
                      │
                      ▼
┌─────────────────────────────────────────────┐
│ Generating the plurality of advertisement plans by │ ⟩ 304
│    utilizing the plurality of target materials      │
└─────────────────────────────────────────────┘
                      │
                      ▼
┌─────────────────────────────────────────────┐
│  Obtaining at least one estimated revenue value │ ⟩ 305
│  generated by any advertisement plan under any  │
│         candidate budget allocation             │
└─────────────────────────────────────────────┘
                      │
                      ▼
┌─────────────────────────────────────────────┐
│ Determining the candidate budget respectively matched │ ⟩ 306
│ by the plurality of advertisement plans, with at least one │
│  estimated revenue value respectively corresponding to │
│ the plurality of advertisement plans satisfying a revenue │
│    value requirement as an optimization objective      │
└─────────────────────────────────────────────┘
                      │
                      ▼
┌─────────────────────────────────────────────┐
│ Taking the candidate budget respectively matched by │ ⟩ 307
│ the plurality of advertisement plans as a target budget │
│   respectively corresponding to the plurality of    │
│            advertisement plans                      │
└─────────────────────────────────────────────┘
```

FIG. 3

FIG. 4

501

First Determining Module

502

First Estimating Module

503

Second Determining Module

504

Generating Module

505

Second Estimating Module

506

Third Determining Module

507

Fourth Determining Module

FIG. 5

602

601

Processing Component

Storage Component

Computer Instruction(s)

FIG. 6

Europäisches
Patentamt

European
Patent Office

Office européen
des brevets

# EUROPEAN SEARCH REPORT

**Application Number**

EP 25 19 9210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/150626 A1 (ZHANG RUOFEI BRUCE [US] ET AL) 14 June 2012 (2012-06-14)<br>* paragraphs [0001] - [0008] *<br>* paragraphs [0024] - [0035] *<br>* paragraphs [0054] - [0056] *<br>* paragraphs [0059] - [0062] *<br>* paragraphs [0069] - [0072] *<br>----- | 1-15 | INV.<br>G06Q30/0241<br>G06Q30/0251<br>G06N20/00 |
| X | US 2018/276708 A1 (MYERS RAYMOND [US] ET AL) 27 September 2018 (2018-09-27)<br>* paragraphs [0002] - [0004] *<br>* paragraphs [0015], [0018], [0021], [0022] *<br>* paragraphs [0025] - [0034] *<br>* paragraphs [0039] - [0043] *<br>----- | 1-15 | |

**TECHNICAL FIELDS SEARCHED (IPC)**

G06Q
G06N

The present search report has been drawn up for all claims

| Place of search | Date of completion of the search | Examiner |
|---|---|---|
| The Hague | 7 November 2025 | De Smet, Michaël |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 19 9210

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | Publication date | Patent family member(s) | Publication date |
|---|---|---|---|
| US 2012150626 A1 | 14-06-2012 | NONE | |
| US 2018276708 A1 | 27-09-2018 | US 2016292722 A1<br>US 2018276708 A1 | 06-10-2016<br>27-09-2018 |

EPO FORM P0459

For more details about this annex : see Official Journal of the European Patent Office, No. 12/82